# EUROPÄISCHE PATENTSCHRIFT

(11) **EP 4 109 710 B1**
(45) Veröffentlichungstag und Bekanntmachung des Hinweises auf die Patenterteilung: **10.04.2024**
(21) Anmeldenummer: 22176740.3
(22) Anmeldetag: 01.06.2022
(51) Int. Cl.: H02J 7/00

(54) **GEKOPPELTER BETRIEB ELEKTRISCH BETREIBBARER GARTENGERÄTE**
COUPLED OPERATION OF ELECTRICALLY OPERABLE GARDENING DEVICES
FONCTIONNEMENT COUPLÉ DES APPAREILS ÉLECTRIQUES DE JARDINAGE

(30) Priorität: 23.06.2021 DE 102021116229
(43) Veröffentlichungstag der Anmeldung: 28.12.2022
(73) Patentinhaber: Einhell Germany AG, 94405 Landau / Isar (DE)
(72) Erfinder: Dr. THANNHUBER, Markus, 94405 Landau (DE)
(74) Vertreter: Hofstetter, Schurack & Partner

(56) Entgegenhaltungen:
- WO-A1-2017/186372
- DE-A1-102013 107 492
- US-A1- 2016 366 813

## Beschreibung

Die vorliegende Erfindung betrifft ein Verfahren zum gekoppelten Betrieb elektrisch betreibbarer Gartengeräte sowie ein entsprechendes System.

Aus der DE 10 2013 107492 A1 ist ein System zur Überwachung und Steuerung von Aktivitäten mehrerer Gartengeräte bekannt. Das System kann mittels der angegliederten Überwachungsvorrichtung mehrere unterschiedliche Gartengeräte koordinieren und deren Aktivitäten in einander überlappende Aktivitätsgebieten, aufeinander abstimmen.

Aus der US 2016/366813 A1 ist bekannt, dass eine Steuervorrichtung für eine im freien arbeitende Versorgungsmaschine, abhängig von Wettervorhersagedaten, eine Zeitplan erstellt. Abhängig von den zu erwartenden, regenbedingten Unterbrechungszeiten, werden die Arbeitszeiten errechnet.

Aus der WO 2017/186372 A1 ist ein intelligentes System für einen Garten bekannt, welches eine Rechenvorrichtung und ein dazugehöriges, sensorüberwachtes Batteriepaket aufweist, einen Transceiver zur Datenkommunikation. Abhängig von Batterieparametern, steuert die Rechenvorrichtung unter Berücksichtigung weiterer Telemetriedaten des Gartengeräts angepasste Maßnahmen, wie zum Beispiel die Auslösung eines Alarms oder die Einleitung eines Ladestopps. Beim Betrieb mehrerer Gartengeräte kann es mitunter unerwünscht sein, dass beide Gartengeräte gleichzeitig aktiv sind, beispielsweise wenn sich deren Funktionen gegenseitig beeinflussen oder ein Benutzer eines Gartengeräts durch die Funktion eines anderen Gartengeräts beeinträchtigt wird.

Es ist eine Aufgabe der vorliegenden Erfindung, den gekoppelten Betrieb von zwei oder mehr elektrisch betreibbaren Gartengeräten zu automatisieren, so dass eine Beeinträchtigung eines Gartengeräts oder eines Benutzers durch ein weiteres Gartengerät vermieden wird.

Diese Aufgabe wird gelöst durch den jeweiligen Gegenstand der unabhängigen Ansprüche. Vorteilhafte Weiterbildungen und bevorzugte Ausführungsformen sind Gegenstand der abhängigen Ansprüche.

Die Erfindung beruht auf dem Gedanken, ein Netzwerk aus zwei oder mehr direkt oder indirekt miteinander kommunizierenden Akkupacks verschiedener Gartengeräte aufzubauen, so dass bei der Aktivierung eines Gartengeräts ein aktiver Betriebsmodus eines anderen Gartengeräts automatisch beendet wird.

Ein erstes elektrisch betreibbares Gartengerät, welches ein erstes Akkupack aufweist, wird in einem Betriebsmodus betrieben. Eine Aktivierung eines zweiten elektrisch betreibbaren Gartengeräts wird mittels eines zweiten Akkupacks des zweiten Gartengeräts detektiert, insbesondere während das erste Gartengerät in dem aktiven Betriebsmodus betrieben wird. Eine Aktivierungsinformation wird von dem zweiten Akkupack an das erste Akkupack übermittelt, insbesondere direkt oder indirekt, wenn die Aktivierung des zweiten Gartengeräts detektiert wurde. Der aktive Betriebsmodus des ersten Gartengeräts wird mittels des ersten Akkupacks abhängig von der Aktivierungsinformation beendet.

Unter einem Gartengerät kann im Allgemeinen ein Werkzeug, eine Maschine oder eine Vorrichtung verstanden werden, das dazu geeignet ist, im Freien, insbesondere in einem Garten, verwendet zu werden, beispielsweise zur Bearbeitung von Pflanzen, zur Bewässerung von Pflanzen oder einer Fläche oder zur Rasenbearbeitung. Insbesondere kann ein Gartengerät also als Rasenmäher oder Bewässerungsanlage ausgestaltet sein. Ein Gartengerät kann auch als manuell führbares Gartengerät ausgestaltet sein, beispielsweise als Heckenschere, Rasentrimmer, et cetera. Elektrisch betreibbaren Gartengeräten ist dabei gemein, dass sie zu deren bestimmungsgemäßen Betrieb mit elektrischer Energie versorgt werden müssen. Die elektrische Energie kann beispielsweise zur Versorgung eines Motors, eines Aktuators, eines Stellglieds, einer elektronischen Steuerung und so weiter dienen.

Im Falle des ersten und des zweiten elektrisch betreibbaren Gartengeräts wird die elektrische Energie über das jeweilige Akkupack bereitgestellt, das zu diesem Zweck mit einer Komponente, beispielsweise einem Gehäuse, des jeweiligen Gartengerätes mechanisch und elektrisch gekoppelt werden kann. Das erste und das zweite Akkupack weisen hierzu jeweils wenigstens eine Akkumulatorzelle auf, beispielsweise wenigstens eine Li-lonen- Akkumulatorzelle.

Im Betrieb des jeweiligen Gartengeräts ist ein Akkugehäuse des jeweiligen Akkupacks insbesondere mit dem jeweiligen Gehäuse des Gartengeräts gekoppelt beziehungsweise an diesem befestigt. Das Akkupack ist dabei lösbar, insbesondere zerstörungsfrei lösbar, mit dem Gehäuse des Gartengeräts verbunden, beispielsweise über eine Rastverbindung, eine Steckverbindung und/oder eine Klemmverbindung. Insbesondere kann die mechanische Verbindung des Akkupacks mit dem Gehäuse des Gartengeräts als formschlüssige und/oder kraftschlüssige Verbindung ausgestaltet sein, ohne dass eine stoffschlüssige Verbindung vorliegt. Mit anderen Worten kann die mechanische Verbindung des Akkupacks mit dem Gehäuse des Gartengeräts gelöst werden, ohne dass eine stoffschlüssige Verbindung zu lösen ist. Vorzugsweise kann die mechanische Verbindung bestimmungsgemäß manuell ohne den Einsatz sonstiger Werkzeuge gelöst werden. Mit anderen Worten ist das Akkupack als Wechsel-Akkupack, insbesondere System-Akkupack ausgestaltet. Zur elektrischen und mechanischen Verbindung können die Gehäuse des Akkupacks und des Gartengeräts jeweilige Schnittstellen aufweisen.

Die elektrische Verbindung kann beispielsweise über einen oder mehrere Steckkontakte, insbesondere sogenannte Tulpenkontakte oder Schwertkontakte, erfolgen. Beispielsweise können an den Schnittstellen der entsprechenden Gehäuse jeweils zueinander kompatible Stecker oder Buchsen beziehungsweise Aufnahmen oder dergleichen vorgesehen sein, um die elektrische Verbindung des Akkupacks mit dem Gartengerät zu erzielen.

Der aktive Betriebsmodus des ersten Gartengeräts kann als Betriebsmodus verstanden werden, in dem das erste Gartengerät eine bestimmungsgemäße Funktion durchführt. Dazu kann das erste Gartengerät insbesondere auf seine Umgebung einwirken, indem es sich beispielsweise automatisch in der Umgebung bewegt, Wasser ausbringt, ein Werkzeug zur Rasenbearbeitung oder dergleichen bewegt und so weiter. Während des aktiven Betriebsmodus wird das erste Gartengerät insbesondere durch das erste Akkupack mit elektrischer Energie versorgt.

Das Beenden des aktiven Betriebsmodus des ersten Gartengeräts kann eine dauerhafte Beendigung des aktiven Betriebsmodus beinhalten, beispielsweise bis zu einem erneuten manuellen Starten des aktiven Betriebsmodus, oder eine vorübergehende Unterbrechung, beispielsweise für eine vorgegebene Zeitdauer oder bis eine Deaktivierung des zweiten Gartengeräts detektiert und eine entsprechende Deaktivierungsinformation von dem zweiten Akkupack an das erste Akkupack übermittelt wird.

Die Aktivierung beziehungsweise Deaktivierung des zweiten Elektrogeräts kann dabei im Allgemeinen manuell erfolgen oder automatisch, beispielsweise aufgrund einer entsprechenden Programmierung des ersten Gartengeräts. Die Aktivierung des zweiten Gartengeräts kann beispielsweise detektiert werden, indem eine Betätigung eines Bedienelements, beispielsweise zur manuellen Bedienung, insbesondere eines Hebels, Schalters oder dergleichen, detektiert wird. Alternativ oder zusätzlich kann die Aktivierung des zweiten Gartengeräts auch dadurch detektiert werden, dass eine Abgabe elektrischer Energie von dem zweiten Akkupack an das zweite Gartengerät detektiert wird. Die Detektion kann dabei also durch das zweite Akkupack allein erfolgen oder durch die Erfassung entsprechender Sensorsignale mittels des zweiten Akkupacks, wobei ein Sensor, der das Sensorsignal abhängig von der Aktivierung erzeugt innerhalb des zweiten Akkupacks angeordnet sein kann, sich jedoch auch außerhalb des zweiten Akkupacks in dem zweiten Gartengerät befinden kann. Das Sensorsignal kann dann beispielsweise über die elektrische Verbindung des Akkupacks mit dem Gartengerät übermittelt werden.

Die Aktivierungsinformation entspricht einer Information darüber, dass die Aktivierung des zweiten Gartengeräts detektiert wurde, insbesondere mittels des zweiten Akkupacks. Das Übermitteln der Aktivierungsinformation von dem zweiten Akkupack zu dem ersten Akkupack kann beispielsweise eine Modifikation der Aktivierungsinformation beinhalten, so dass das erste Akkupack nicht notwendigerweise das identische Signal erhält, wie es mittels des zweiten Akkupacks erzeugt wurde. Das erste Akkupack erhält jedoch durch die Übermittlung der Aktivierungsinformation stets eine Information, dass das zweite Akkupack die Aktivierung des zweiten Gartengeräts detektiert hat.

Die Aktivierungsinformation kann direkt oder indirekt übermittelt werden. Unter einer direkten Übermittlung kann dabei eine Übermittlung von dem zweiten Akkupack zu dem ersten Akkupack ohne Zwischenschaltung einer weiteren Instanz oder eines weiteren Geräts verstanden werden. Bei einer indirekten Übermittlung wird die Aktivierungsinformation dagegen von dem zweiten Akkupack an eine Zwischeninstanz, beispielsweise eine externe Kommunikationseinheit, übermittelt und von dieser an das erste Akkupack weitergeleitet. Zur Übermittlung der Aktivierungsinformation können dabei eines oder mehrere Funksignale verwendet werden, so dass die Übermittlung also insbesondere wenigstens teilweise drahtlos erfolgt. Bei der direkten Übermittlung der Aktivierungsinformation kann von dem zweiten Akkupack ein Funksignal erzeugt und direkt an das erste Akkupack übermittelt beziehungsweise von diesem erfasst werden. Bei der indirekten Übermittlung kann das Funksignal von dem zweiten Akkupack an die Zwischeninstanz übermittelt werden und ein weiteres Funksignal kann entsprechend von der Zwischeninstanz an das erste Akkupack übermittelt werden.

Indem der aktive Betriebsmodus des ersten Gartengeräts beendet wird, wenn die Aktivierung des zweiten Gartengeräts detektiert wurde, kann der Betrieb des ersten und des zweiten Gartengeräts als gekoppelter Betrieb verstanden werden. Durch das erfindungsgemäße Verfahren wird also sichergestellt, dass bei aktiviertem zweitem Gartengerät das erste Gartengerät nicht in dem aktiven Betriebsmodus betrieben wird. Dies hat zur Folge, dass eine Einwirkung des ersten Gartengeräts auf seine Umgebung, insbesondere auf das zweite Gartengerät oder einen Benutzer des zweiten Gartengeräts, bei aktiviertem zweitem Gartengerät verhindert wird. Indem die Aktivierung des zweiten Gartengeräts automatisch mittels des zweiten Akkupacks detektiert wird und automatisch die entsprechende Aktivierungsinformation an das erste Akkupack übermittelt wird, welches automatisch den aktiven Betriebsmodus des ersten Gartengeräts beendet, wird ein hochgradig automatisierter gekoppelter Betrieb der Gartengeräte ermöglicht, was wiederum den Komfort für den Benutzer erhöht.

Hinsichtlich der Ausgestaltungsform der Gartengeräte und dem entsprechend des aktiven Betriebsmodus des ersten Gartengeräts sind verschiedene Möglichkeiten denkbar, in denen die Erfindung besonders vorteilhaft ist. Beispielsweise könnte das erste Gartengerät als Rasenmähroboter oder dergleichen ausgestaltet sein, der sich im aktiven Betriebsmodus selbsttätig auf einer Rasenfläche oder dergleichen bewegt. Soll nun das zweite Gartengerät, beispielsweise ein manuell führbares Gartengerät, wie eine Heckenschere oder dergleichen, oder auch ein automatisches Gartengerät, wie etwa eine programmierbare Bewässerungsanlage, aktiviert werden, so kann es für einen Benutzer des zweiten Gartengeräts störend sein, wenn sich der Rasenmähroboter durch den Garten bewegt oder es kann für den Rasenmähroboter unvorteilhaft sein, wenn dieser durch die Bewässerungsanlage beeinträchtigt wird. Ein anderes Anwendungsbeispiel wäre eine automatische Bewässerungsanlage als erstes Gartengerät, das im aktiven Betriebsmodus eine Rasenfläche bewässert. Möchte der Benutzer des zweiten Gartengeräts dieses nun aktivieren, so ist es vorteilhaft, wenn die Bewässerung dazu wenigstens zeitweise unterbrochen wird. Diese Konstellationen sind jedoch nicht grundsätzlich beschränkend aufzufassen, sondern können auf andere Situationen übertragen werden, in denen der aktive Betriebsmodus des ersten Gartengeräts inkompatibel mit der Aktivierung des zweiten Gartengeräts ist beziehungsweise eine gleichzeitige Aktivierung des zweiten Gartengeräts bei Betrieb des ersten Gartengeräts im aktiven Betriebsmodus aus sonstigen Gründen unerwünscht oder nachteilig ist.

Es wird darauf hingewiesen, dass das erste Akkupack das einzige Akkupack des ersten Gartengeräts sein kann oder dass das erste Gartengerät neben dem ersten Akkupack eines oder mehrere weitere erste Akkupacks enthalten kann. Dasselbe gilt analog für das zweite Gartengerät und gegebenenfalls eines oder mehrere weitere zweite Akkupacks. Im Kontext der Erfindung ist es ausreichend, wenn pro Gartengerät genau ein Akkupack, also das erste Akkupack des ersten Gartengeräts und das zweite Akkupack des zweiten Gartengeräts, die Aktivierungsinformation senden beziehungsweise empfangen können und die beschriebenen Schritte ausführen können. Die verschiedenen Verfahrensschritte können aber auch auf mehrere Akkupacks eines Gartengeräts verteilt sein. Die Erfindung bleibt davon unberührt, insbesondere können alle Akkupacks eines Gartengeräts effektiv wie ein einziges Akkupack betrachtet werden.

Gemäß zumindest einer Ausführungsform des Verfahrens wird das erste Gartengerät abhängig von der Aktivierungsinformation, insbesondere mittels des ersten Akkupacks, von dem aktiven Betriebsmodus in einen passiven Betriebsmodus des ersten Gartengeräts überführt.

Mit anderen Worten wird der aktive Betriebsmodus beendet und danach oder gleichzeitig wird der passive Betriebsmodus eingeleitet. Der passive Betriebsmodus kann dabei beispielsweise einem ausgeschalteten oder deaktivierten Zustand des ersten Gartengeräts entsprechen, einem Bereitschaftsmodus oder einem Ladebetriebsmodus zum Laden des ersten Akkupacks. Insbesondere wird dadurch erreicht, dass das erste Gartengerät sich in dem passiven Betriebsmodus befindet, wenn die Aktivierung des zweiten Gartengeräts detektiert wurde.

Gemäß zumindest einer Ausführungsform wird, insbesondere nach dem Beenden des aktiven Betriebsmodus, beispielsweise nach dem Überführen des ersten Gartengeräts in den passiven Betriebsmodus, eine Deaktivierung des zweiten Gartengeräts mittels des zweiten Akkupacks detektiert. Eine Deaktivierungsinformation wird von dem zweiten Akkupack an das erste Akkupack übermittelt, wenn die Deaktivierung des zweiten Gartengeräts detektiert wurde. Der aktive Betriebsmodus des ersten Gartengeräts wird mittels des ersten Akkupacks abhängig von der Deaktivierungsinformation gestartet beziehungsweise wieder aufgenommen, insbesondere wird das erste Gartengerät abhängig von der Deaktivierungsinformation von dem passiven Betriebsmodus in den aktiven Betriebsmodus überführt.

Die Ausführungen bezüglich der Aktivierung des zweiten Gartengeräts, der Aktivierungsinformation, deren Übermittlung und so weiter können analog auf die Deaktivierung und die Deaktivierungsinformation übertragen werden.

Durch solche Ausführungsformen wird erreicht, dass der aktive Betriebsmodus des ersten Gartengeräts möglichst bald nach der Deaktivierung des zweiten Gartengeräts automatisch wieder gestartet werden kann. Dabei können jedoch neben dem Erhalt der Deaktivierungsinformation durch das erste Akkupack weitere Bedingungen zum erneuten Starten des aktiven Betriebsmodus vorgesehen sein. Beispielsweise kann vorgesehen sein, dass der aktive Betriebsmodus des ersten Gartengeräts nach Erhalt der Deaktivierungsinformation erst dann gestartet wird, wenn eine bestimmte vorgegebene Zeitdauer vergangen ist, insbesondere ohne dass die Aktivierungsinformation erneut erhalten wird. So wird verhindert, dass ein unnötiges Aktivieren und Deaktivieren des aktiven Betriebsmodus erfolgt, wenn das zweite Gartengerät beispielsweise nur kurzzeitig deaktiviert wurde. Der Zeitraum kann beispielsweise einige Sekunden oder Minuten betragen oder auch länger sein.

In verschieden Ausführungsformen kann die Zeitdauer durch einen Benutzer vorgegeben oder angepasst werden.

In verschiedenen weiteren Ausführungsformen wird der aktive Betriebsmodus des ersten Gartengeräts, nach dessen Beendigung abhängig von der Aktivierungsinformation, abhängig von einer Benutzerinteraktion gestartet beziehungsweise wieder aufgenommen. Insbesondere wird der aktive Betriebsmodus des ersten Gartengeräts, nach dessen Beendigung abhängig von der Aktivierungsinformation, nur dann wieder gestartet beziehungsweise wieder aufgenommen, wenn eine manuelle Inbetriebnahme des ersten Gartengeräts durch den Benutzer erfolgt.

Gemäß zumindest einer Ausführungsform wird die Aktivierung des zweiten Gartengeräts als manuelle Aktivierung des zweiten Gartengeräts durch einen Benutzer des zweiten Gartengeräts detektiert.

Mit anderen Worten ist das zweite Gartengerät als manuell aktivierbares und/oder manuell bedienbares und/oder manuell führbares Gartengerät ausgestaltet. In solchen Ausführungsformen kann mit Vorteil eine Beeinträchtigung des Benutzers durch das erste Gartengerät im aktiven Betriebsmodus verhindert werden.

Die manuelle Aktivierung des zweiten Gartengeräts kann insbesondere als Bedienung oder Betätigung eines Hebels, eines Schalters, einer berührungsempfindliche Fläche oder einer sonstige Bedienkomponente oder Bedienschnittstelle des zweiten Gartengeräts detektiert werden.

Das zweite Gartengerät kann beispielsweise als Heckenschere, manuell führbarer Rasenmäher, Rasentrimmer, Rasenvertikutierer, Rasenlüfter, Astsäge, Bodenhacke, Häcksler, Laubbläser oder Laubsauger, Kettensäge, Motorsense und so weiter ausgestaltet sein. Allen diesen Gartengeräten ist gemein, dass sie im Allgemeinen nicht vollständig automatisch betrieben werden oder betrieben werden können.

Gemäß zumindest einer Ausführungsform wird das erste Gartengerät während des Betriebs in dem aktiven Betriebsmodus automatisch betrieben.

Dies kann insbesondere derart verstanden werden, dass während des Betriebs in dem aktiven Betriebsmodus zumindest vorübergehend kein manueller Eingriff durch einen Benutzer in dem Betrieb des ersten Gartengeräts erforderlich ist. Hierzu kann das erste Gartengerät beispielsweise entsprechend programmiert sein, beispielsweise kann eine Zeitsteuerung oder dergleichen vorgesehen sein.

Das erste Gartengerät ist also beispielsweise als automatisches oder automatisch betreibbares Gartengerät ausgestaltet. Das erste Gartengerät kann dabei in dem aktiven Betriebsmodus wenigstens teilweise automatisch, beispielsweise aber auch vollautomatisch oder vollautonom betrieben werden.

Durch das erfindungsgemäße Verfahren, gemäß dem der aktive Betriebsmodus automatisch abhängig von der Aktivierungsinformation beendet wird und in entsprechenden Ausführungsformen gegebenenfalls automatisch wieder gestartet wird, kann eine Interaktion eines Benutzers mit dem ersten Gartengerät weitgehend reduziert werden, so dass der Benutzer insbesondere eine Programmierung oder Einstellung des automatischen ersten Gartengeräts nicht vornehmen muss, um vorübergehend den aktiven Betriebsmodus zu beenden.

Gemäß zumindest einer Ausführungsform wird das erste Gartengerät im aktiven Betriebsmodus zur Rasenbearbeitung, insbesondere zur automatischen oder vollautomatischen Rasenbearbeitung, betrieben.

Unter einer Rasenbearbeitung kann dabei das Mähen, Lüften und/oder Vertikutieren einer Rasenfläche verstanden werden.

Insbesondere ist also das erste Gartengerät in solchen Ausführungsformen als Gerät zur Rasenbearbeitung ausgestaltet, beispielsweise als Rasenbearbeitungsroboter, etwa als Rasenmähroboter oder dergleichen.

Der aktive Betriebsmodus kann beispielsweise einem Betriebsmodus entsprechen, in dem das erste Gartengerät zur Rasenbearbeitung automatisch und ohne erforderlichen Eingriff durch einen Benutzer eine definierte oder zufällige Fläche abfährt, um den Rasen zu bearbeiten, insbesondere zu mähen. Der passive Betriebsmodus kann beispielsweise einem Betriebsmodus entsprechen, in dem das erste Gartengerät an einer Position verharrt oder sich zu einer Ladestation oder einer sonstigen Basisstation begibt und dort verharrt.

Ausführungsformen des Verfahrens, in denen das erste Gartengerät zur Rasenbearbeitung, insbesondere zur automatischen Rasenbearbeitung, betrieben wird, sind besonders vorteilhaft, da durch die automatisierte Bewegung des ersten Gartengeräts auf der Rasenfläche eine signifikante Beeinträchtigung des Benutzers des zweiten Gartengeräts, insbesondere bei einer manuellen Benutzung des zweiten Gartengeräts, gegeben ist.

Gemäß zumindest einer Ausführungsform wird das erste Gartengerät im aktiven Betriebsmodus zur Gartenbewässerung betrieben, insbesondere zur automatischen Gartenbewässerung.

Das erste Gartengerät ist also insbesondere als Gerät zur Gartenbewässerung ausgestaltet, beispielsweise als Gartenbewässerungsanlage oder Teil einer Gartenbewässerungsanlage. Beispielsweise kann das erste Gartengerät als Bewässerungssteuerung oder Bewässerungscomputer oder als Pumpe, als automatisches Sprinklersystem, et cetera ausgestaltet sein. Der aktive Betriebsmodus kann dann insbesondere einem Betriebsmodus entsprechen, in dem Wasser auf eine Rasenfläche ausgebracht wird. Der passive Betriebsmodus kann einem Betriebsmodus entsprechen, in dem kein Wasser auf die Rasenfläche ausgebracht wird.

Auch solche Ausführungsformen sind besonders vorteilhaft, da der aktive Betriebsmodus im Falle eines Gartengeräts zur Gartenbewässerung für einen Benutzer im Umfeld des ersten Gartengeräts besonders unangenehm sein kann.

Gemäß zumindest einer Ausführungsform, insbesondere einer Ausführungsform, in der das erste Gartengerät als Gartengerät zur Rasenbearbeitung ausgestaltet ist, wird das erste Gartengerät, insbesondere mittels des ersten Akkupacks, abhängig von der Aktivierungsinformation dazu veranlasst, sich automatisch mit einer Ladestation für das erste Gartengerät zu verbinden, und beispielsweise ein Laden des ersten Akkupacks einzuleiten.

Dazu kann sich das erste Gartengerät beispielsweise automatisch von einem aktuellen Standort zu der Ladestation begeben und sich automatisch mit dieser verbinden. Der passive Betriebsmodus kann dann beispielsweise einem Ladebetriebsmodus entsprechen. Solche Ausführungsformen sind besonders vorteilhaft, weil die Zeit, während der das erste Gartengerät nicht aktiv benutzt wird, in effizienter Weise zum Laden des ersten Akkupacks genutzt werden kann. Somit kann eine sinnvolle Nutzungsdauer des ersten Gartengeräts erhöht werden.

Gemäß zumindest einer Ausführungsform wird mittels des zweiten Akkupacks ein Funksignal erzeugt, das Deaktivierungsinformationen enthält. Das Funksignal wird, insbesondere direkt, an das erste Akkupack übermittelt, um die Aktivierungsinformation an das erste Akkupack zu übermitteln.

Unter einem Funksignal können hier und im Folgenden elektromagnetische Wellen verstanden werden, deren Frequenzen kleiner oder gleich 3 THz sind und die sich ohne künstliche Führung im Raum ausbreiten. Entsprechende Frequenzbereiche für das Funksignal können Niederfrequenzwellen, Radiowellen oder Mikrowellen entsprechen.

Beispielsweise kann die Frequenz der elektromagnetischen Wellen zwischen 3 Hz und 3 THz liegen, insbesondere zwischen 100 MHz und 100 GHz.

Das Funksignal kann also beispielsweise in einem WLAN-Netzwerk, welches das erste und das zweite Akkupack beinhaltet, oder per Bluetooth-Verbindung zwischen dem ersten und dem zweiten Akkupack ausgetauscht werden. Die Übermittlung des Funksignals kann auch basierend auf einem GSM-Standard oder auf einem auf dem GSM-Standard basierenden Standard, wie beispielsweise Edge, UMTS, HSDPA, LTE oder einem sonstigen Mobilfunkstandard realisiert sein. Die Übermittlung kann beispielsweise basierend auf LTE-M, LTE-CAT-M1 oder einem sonstigen Standard erfolgen. Die Übermittlung kann auch gemäß einem Schmalband-Internet-der-Dinge-Standard, NB-IOT (Englisch: "Narrow band internet of things") oder einem anders ausgestalteten Niedrigenergieweitverkehrnetzwerk, LPWAN (Englisch: "low power wide area network"), erfolgen.

Durch die direkte Übermittlung des Funksignals mit der Aktivierungsinformation von dem zweiten Akkupack an das erste Akkupack wird eine Abhängigkeit von der Verfügbarkeit von Zwischeninstanzen, wie beispielsweise externen Kommunikationseinheiten oder dergleichen, vermieden.

Gemäß zumindest einer Ausführungsform wird mittels des zweiten Akkupacks ein Funksignal erzeugt, dass die Aktivierungsinformation enthält und das Funksignal wird, insbesondere direkt, von dem zweiten Akkupack an eine externe Kommunikationseinheit übermittelt. Abhängig von dem übermittelten Funksignal wird ein weiteres Funksignal, welches die Aktivierungsinformation enthält, von der externen Kommunikationseinheit an das erste Akkupack übermittelt, um die Aktivierungsinformation an das erste Akkupack zu übermitteln.

Anhand solcher Ausführungsformen kann gegebenenfalls die Reichweite erhöht werden, so dass auch größere räumliche Distanzen zwischen dem ersten und dem zweiten Akkupack beziehungsweise dem ersten und dem zweiten Gartengerät vorgesehen sein können.

Die externe Kommunikationseinheit ist dabei insbesondere extern zu dem ersten und dem zweiten Akkupack und extern zu dem ersten und dem zweiten Gartengerät angeordnet. Beispielsweise kann die externe Kommunikationseinheit als Servercomputersystem, Cloudcomputersystem, Internetrouter, Funksignalverstärkereinheit oder Funksignalwiederholungseinheit (Englisch: "Repeater") ausgestaltet sein oder Teil einer solchen Einheit sein.

Ein System zum gekoppelten Betrieb elektrisch betreibbarer Gartengeräte. Das System weist ein erstes Akkupack für ein erstes elektrisch betreibbares Gartengerät auf sowie ein zweites Akkupack für ein zweites elektrisch betreibbares Gartengerät. Das zweite Akkupack weist eine Sensoreinheit auf, die dazu eingerichtet ist, eine Aktivierung des zweiten Gartengeräts zu detektieren. Das System weist eine Kommunikationsvorrichtung auf, die dazu eingerichtet ist, abhängig von der detektierten Aktivierung des zweiten Gartengeräts eine Aktivierungsinformation von dem ersten Akkupack an das zweite Akkupack zu übermitteln. Das erste Akkupack weist einen Steuerschaltkreis auf, der dazu eingerichtet ist, abhängig von der Aktivierungsinformation einen aktiven Betriebsmodus des ersten Gartengeräts zu beenden, insbesondere wenn zum entsprechenden Zeitpunkt das erste Gartengerät in dem aktiven Betriebsmodus betrieben wird.

Zum Detektieren der Aktivierung des zweiten Gartengeräts kann neben der Sensoreinheit des zweiten Akkupacks eine weitere Sensoreinheit des zweiten Gartengeräts vorgesehen sein, die außerhalb des zweiten Akkupacks angeordnet ist. So kann beispielsweise durch die weitere Sensoreinheit die Aktivierung einer Komponente, beispielsweise einer Bedienkomponente, des zweiten Gartengeräts erfasst werden und ein entsprechendes Signal an die Sensoreinheit des zweiten Akkupacks übermittelt werden. Alternativ kann die Sensoreinheit des zweiten Akkupacks alleine ausreichen, um die Aktivierung des zweiten Gartengeräts zu detektieren. Beispielsweise kann die Sensoreinheit hierzu einen Stromsensor beinhalten, der einen Strom von wenigstens einer Akkumulatorzelle an einen Motor, Aktuator oder Steuerschaltkreis des zweiten Gartengeräts detektieren kann, um die Aktivierung des zweiten Gartengeräts zu detektieren.

Gemäß zumindest einer Ausführungsform weist das zweite Akkupack eine zweite Kommunikationseinheit der Kommunikationsvorrichtung auf, die dazu eingerichtet ist, ein Funksignal, welches die Aktivierungsinformation enthält, zu erzeugen und auszusenden und das erste Akkupack weist eine erste Kommunikationseinheit der Kommunikationsvorrichtung auf, die dazu eingerichtet ist, das Funksignal zu erfassen.

Auf diese Weise wird insbesondere eine direkte Kommunikation zwischen dem ersten und dem zweiten Akkupack ermöglicht, also ein direktes Übermitteln der Aktivierungsinformation. Die erste und die zweite Kommunikationseinheit sind dabei Teil der Kommunikationsvorrichtung des Systems.

Gemäß zumindest einer Ausführungsform weist das System eine externe Kommunikationseinheit der Kommunikationsvorrichtung auf, die dazu eingerichtet ist, das Funksignal zu erfassen und abhängig von dem Funksignal ein weiteres Funksignal, welches die Aktivierungsinformation enthält, zu erzeugen und auszusenden. Die erste Kommunikationseinheit der Kommunikationsvorrichtung beziehungsweise des ersten Akkupacks ist dazu eingerichtet, das weitere Funksignal zu erfassen.

Auf diese Weise wird also eine indirekte Übermittlung der Aktivierungsinformation von dem zweiten Akkupack über die externe Kommunikationseinheit an das erste Akkupack ermöglicht.

Gemäß zumindest einer Ausführungsform beinhaltet das System das erste Gartengerät und das zweite Gartengerät.

Gemäß zumindest einer Ausführungsform ist das erste Gartengerät als Gerät zur Rasenbearbeitung ausgestaltet oder als Gerät zur Gartenbewässerung.

Gemäß zumindest einer Ausführungsform weist das zweite Gartengerät eine Bedieneinheit zur manuellen Bedienung des zweiten Gartengeräts auf und die Sensoreinheit ist mit der Bedieneinheit gekoppelt, um eine manuelle Bedienung des zweiten Gartengeräts mittels der Bedieneinheit als Aktivierung des zweiten Gartengeräts zu detektieren.

Weitere Ausführungsformen des erfindungsgemäßen Systems folgen direkt aus den verschiedenen Ausgestaltungsformen des erfindungsgemäßen Verfahrens und umgekehrt. Insbesondere kann ein System gemäß der Erfindung zur Ausführung eines erfindungsgemäßen Verfahrens eingerichtet sein oder ein solches Verfahren ausführen.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren gezeigten Merkmale und Merkmalskombinationen können nicht nur in der jeweils angegebenen Kombination, sondern auch in anderen Kombinationen von der Erfindung umfasst sein. Es sind insbesondere auch Ausführungen und Merkmalskombinationen von der Erfindung umfasst, die nicht alle Merkmale eines ursprünglich formulierten Anspruchs aufweisen. Es sind darüber hinaus Ausführungen und Merkmalskombinationen von der Erfindung umfasst, die über die in den Rückbezügen der Ansprüche dargelegten Merkmalskombinationen hinausgehen oder von diesen abweichen.

Die Erfindung wird im Folgenden anhand konkreter Ausführungsbeispiele und zugehöriger schematischer Zeichnungen näher erläutert. In den Figuren können gleiche oder funktionsgleiche Elemente mit denselben Bezugszeichen versehen sein. Die Beschreibung gleicher oder funktionsgleicher Elemente wird gegebenenfalls nicht notwendigerweise bezüglich verschiedener Figuren wiederholt.

In den Figuren zeigen:
- Fig. 1: eine schematische Darstellung einer beispielhaften Ausführungsform eines erfindungsgemäßen Systems; und
- Fig. 2: eine schematische Darstellung einer weiteren beispielhaften Ausführungsform eines erfindungsgemäßen Systems.

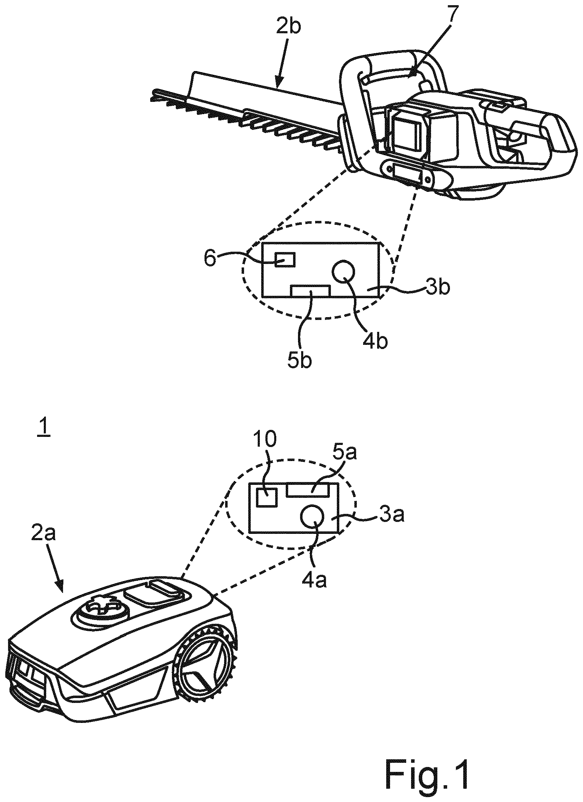

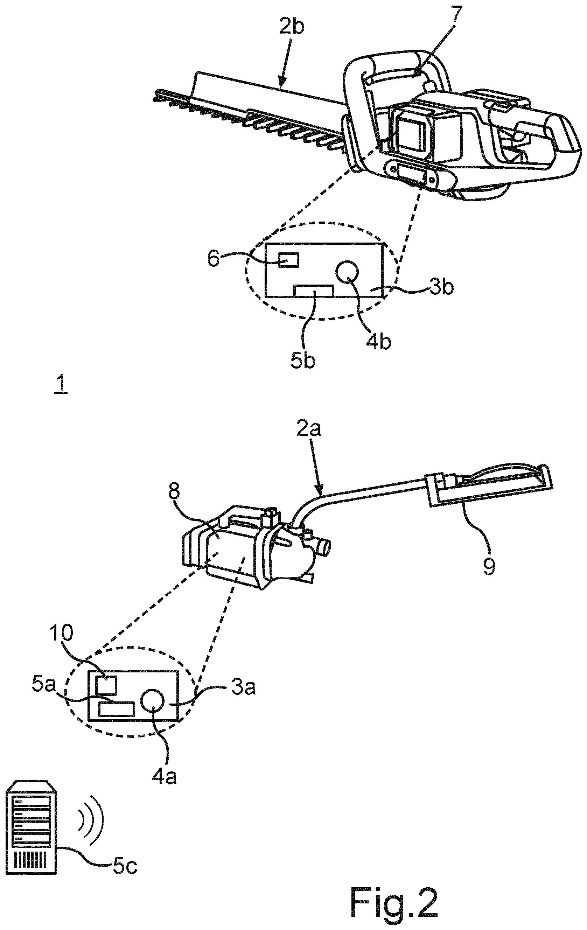

In Fig. 1 ist schematisch eine beispielhafte Ausführungsform eines erfindungsgemäßen Systems 1 zum gekoppelten Betrieb elektrisch betreibbarer Gartengeräte 2a, 2b dargestellt. Eine weitere beispielhafte Ausführungsform des Systems 1 ist in Fig. 2 dargestellt.

Das System 1 weist ein erstes Akkupack 3a zur Versorgung des ersten Gartengeräts 2a mit elektrischer Energie auf und ein zweites Akkupack 3b zur Versorgung des zweiten Gartengeräts 2b mit elektrischer Energie. Insbesondere beinhaltet das erste Akkupack 3a zu diesem Zweck eine oder mehrere erste Akkumulatorzellen 4a und das zweite Akkupack 3b beinhaltet zu diesem Zweck eine oder mehrere zweite Akkumulatorzellen 4b.

Das zweite Akkupack 3b weist eine Sensoreinheit 6 auf, die dazu eingerichtet ist, eine Aktivierung des zweiten Gartengeräts 2b zu detektieren. Beispielsweise kann die Sensoreinheit 6 eine elektrische Stromstärke von der wenigstens einen zweiten Akkumulatorzelle 4b zu einem Motor oder Aktuator des zweiten Gartengeräts 2b messen und basierend darauf die Aktivierung des zweiten Gartengeräts 2b detektieren.

Das System 1 weist außerdem eine Kommunikationsvorrichtung auf, die eine erste Kommunikationseinheit 5a des ersten Akkupacks 3a und eine zweite Kommunikationseinheit 5b des zweiten Akkupacks 3b enthält. Die Kommunikationseinheiten 5a, 5b sind insbesondere zur drahtlosen Kommunikation ausgestaltet. Mittels der Kommunikationsvorrichtung kann, wenn die Aktivierung des zweiten Gartengeräts 2b durch die Sensoreinheit 6 detektiert wurde, eine Aktivierungsinformation von dem zweiten Akkupack 3b an das erste Akkupack 3a übermittelt werden.

Die Übermittlung der Aktivierungsinformation kann dabei direkt von der zweiten Kommunikationseinheit 5b an die erste Kommunikationseinheit 5a erfolgen, wie es beispielhaft in Fig. 1 dargestellt ist. Hierzu kann die zweite Kommunikationseinheit 5b ein Funksignal erzeugen, welches die Aktivierungsinformation enthält und an die erste Kommunikationseinheit 5a senden, welche das Funksignal und somit die Aktivierungsinformation erfasst.

Alternativ kann die Übermittlung der Aktivierungsinformation auch indirekt über eine externe Kommunikationseinheit 5c der Kommunikationsvorrichtung erfolgen, wie in Fig. 2 schematisch dargestellt. Das von der zweiten Kommunikationseinheit 5b erzeugte Funksignal wird dann von der externen Kommunikationseinheit 5c erfasst und ein weiteres Funksignal wird basierend auf der Aktivierungsinformation beziehungsweise basierend auf dem Funksignal durch die externe Kommunikationseinheit 5c erzeugt und ausgesendet. Das weitere Funksignal und somit die Aktivierungsinformation wird dann mittels der ersten Kommunikationseinheit 5a des ersten Akkupacks 3a erfasst. Abhängig von der erhaltenen Aktivierungsinformation beendet ein Steuerschaltkreis 10 des ersten Akkupacks 3a einen aktiven Betriebsmodus des ersten Gartengeräts 2a.

In vorteilhaften Ausführungsformen ist das zweite Gartengerät 2b als automatisches oder autonomes Gartengerät ausgestaltet. Das zweite Gartengerät 2b kann als manuell führbares oder manuell bedienbares oder manuell zu bedienendes Gartengerät ausgestaltet sein.

In Fig. 1 ist rein beispielhaft eine Heckensäge als zweites Gartengerät 2b dargestellt, das von einem Benutzer mittels eines Bedienelements 7 manuell bedient werden kann. Die manuelle Bedienung kann direkt mechanisch oder indirekt über den Stromfluss von der wenigstens einen zweiten Akkumulatorzelle 4b mittels der Sensoreinheit 6 detektiert werden. Es sind jedoch selbstverständlich auch andere manuell bedienbare Gartengeräte oder auch automatische oder programmierbare Gartengeräte als zweite Gartengeräte 2b im Sinne der Erfindung einsetzbar.

In Fig. 1 ist rein beispielhaft ein Rasenmähroboter als erstes Gartengerät 2a dargestellt. Im aktiven Betriebsmodus kann das erste Gartengerät 2a als Rasenmähroboter beispielsweise vollautomatisch auf einer Rasenfläche bewegt werden, um den Rasen zu mähen, zu lüften oder zu vertikutieren. Wird die Aktivierung des zweiten Gartengeräts 2b detektiert, so kann dies jedoch unerwünscht sein. Durch die Erfindung wird dies mit Vorteil automatisch verhindert.

In Fig. 2 ist rein beispielhaft ebenfalls eine Heckenschere als zweites Gartengerät 2b dargestellt und eine automatische Bewässerungsanlage als erstes Gartengerät 2a. Die Bewässerungsanlage weist dabei beispielsweise eine Sprinklereinheit 9 und eine Pumpe 8 auf, wobei die Pumpe 8 mittels des ersten Akkupacks 3a elektrisch mit Energie versorgt werden kann.

Die Bewässerungsanlage kann beispielsweise über eine Zeitsteuerung verfügen, so dass sie im aktiven Betriebsmodus Wasser auf die Rasenfläche ausbringt. Bei detektierter Aktivierung des zweiten Gartengeräts 2b kann die Wasserausbringung dann entsprechend automatisch beendet werden.

Es wird darauf hingewiesen, dass die Zuordnung der rein beispielhaft gezeigten Gartengeräte 2a, 2b zu der Art und Weise der Übermittlung der Aktivierungsinformation nicht auf die skizzieren Varianten beziehungsweise Kombinationen beschränkt ist. Insbesondere kann auch im Fall einer Bewässerungsanlage als erstes Gartengerät 2a eine direkte Übermittlung der Aktivierungsinformation von dem zweiten Akkupack zu dem ersten Akkupack 3a, 3b erfolgen, beziehungsweise auch im Falle eines Rasenmähroboters als erstem Gartengerät 2a kann eine indirekte Übermittlung der Aktivierungsinformation von dem zweiten Akkupack 3b über die externe Kommunikationseinheit 5c an das erste Akkupack 3a erfolgen.

### BEZUGSZEICHENLISTE:

- 1: System
- 2a, 2b: Gartengeräte
- 3a, 3b: Akkupacks
- 4a, 4b: Akkumulatorzellen
- 5a, 5b, 5c: Kommunikationseinheiten
- 6: Sensoreinheit
- 7: Bedienelement
- 8: Pumpe
- 9: Sprinklereinheit
- 10: Steuerschaltkreis

## Patentansprüche

1. Verfahren zum gekoppelten Betrieb elektrisch betreibbarer Gartengeräte, wobei
- ein erstes elektrisch betreibbares Gartengerät (2a), welches ein erstes Akkupack (3a) aufweist, in einem aktiven Betriebsmodus betrieben wird; **dadurch gekennzeichnet,**
- **dass** eine Aktivierung eines zweiten elektrisch betreibbaren Gartengeräts (2b) mittels eines zweiten Akkupacks (3b) des zweiten Gartengeräts (2b) detektiert wird;
- eine Aktivierungsinformation von dem zweiten Akkupack (3b) an das erste Akkupack (3a) übermittelt wird, wenn die Aktivierung des zweiten Gartengeräts (2b) detektiert wurde;
- der aktive Betriebsmodus des ersten Gartengeräts (2a) mittels des ersten Akkupacks (3a) abhängig von der Aktivierungsinformation beendet wird.

2. Verfahren nach Anspruch 1, wobei die Aktivierung des zweiten Gartengeräts (2b) als manuelle Aktivierung des zweiten Gartengeräts (2b) durch einen Benutzer detektiert wird.

3. Verfahren nach einem der vorhergehenden Ansprüche, wobei das erste Gartengerät (2a) während des Betriebs in dem aktiven Betriebsmodus automatisch betrieben wird.

4. Verfahren nach einem der vorhergehenden Ansprüche, wobei
- das erste Gartengerät (2a) im aktiven Betriebsmodus zur Rasenbearbeitung betrieben wird; oder
- das erste Gartengerät (2a) im aktiven Betriebsmodus zur Gartenbewässerung betrieben wird.

5. Verfahren nach einem der vorhergehenden Ansprüche, wobei das erste Gartengerät (2a) abhängig von der Aktivierungsinformation in einen passiven Betriebsmodus überführt wird.

6. Verfahren nach einem der Ansprüche 1 bis 4, wobei das erste Gartengerät (2a) abhängig von der Aktivierungsinformation dazu veranlasst wird, sich automatisch mit einer Ladestation für das erste Gartengerät (2a) zu verbinden.

7. Verfahren nach einem der vorhergehenden Ansprüche, wobei
- eine Deaktivierung des zweiten Gartengeräts (2b) mittels des zweiten Akkupacks (3b) detektiert wird;
- eine Deaktivierungsinformation von dem zweiten Akkupack (3b) an das erste Akkupack (3a) übermittelt wird, wenn die Deaktivierung des zweiten Gartengeräts (2b) detektiert wurde;
- der aktive Betriebsmodus des ersten Gartengeräts (2a) mittels des ersten Akkupacks (3a) abhängig von der Deaktivierungsinformation gestartet wird.

8. Verfahren nach einem der vorhergehenden Ansprüche, wobei mittels des zweiten Akkupacks (3b)
- ein Funksignal erzeugt wird, das die Aktivierungsinformation enthält;
- das Funksignal an das erste Akkupack (3a) übermittelt wird, um die Aktivierungsinformation an das erste Akkupack (3a) zu übermitteln.

9. Verfahren nach einem der Ansprüche 1 bis 7, wobei mittels des zweiten Akkupacks (3b)
- ein Funksignal erzeugt wird, das die Aktivierungsinformation enthält;
- das Funksignal an eine externe Kommunikationseinheit (5) übermittelt wird;
- abhängig von dem übermittelten Funksignal ein weiteres Funksignal, welches die Aktivierungsinformation enthält, von der externen Kommunikationseinheit (5) an das erste Akkupack (3a) übermittelt wird, um die Aktivierungsinformation an das erste Akkupack (3a) zu übermitteln.

10. System (1) zum gekoppelten Betrieb elektrisch betreibbarer Gartengeräte, das System (1) aufweisend ein erstes Akkupack (3a) für ein erstes elektrisch betreibbares Gartengerät (2a) und ein zweites Akkupack (3b) für ein zweites elektrisch betreibbares Gartengerät (2b), **dadurch gekennzeichnet:**
- **dass** das zweite Akkupack (3b) eine Sensoreinheit (6) aufweist, die dazu eingerichtet ist, eine Aktivierung des zweiten Gartengeräts (2b) zu detektieren;
- das System (1) eine Kommunikationsvorrichtung (5a, 5b, 5c) aufweist, die dazu eingerichtet ist, abhängig von der detektierten Aktivierung des zweiten Gartengeräts (2b) eine Aktivierungsinformation von dem zweiten Akkupack (3b) an das erste Akkupack (3a) zu übermitteln; und
- das erste Akkupack (3a) einen Steuerschaltkreis (7) aufweist, der dazu eingerichtet ist, abhängig von der Aktivierungsinformation einen aktiven Betriebsmodus des ersten Gartengeräts (2a) zu beenden.

11. System (1) nach Anspruch 10, wobei
- das zweite Akkupack (3b) eine zweite Kommunikationseinheit (5b) der Kommunikationsvorrichtung (5a, 5b, 5c) aufweist, die dazu eingerichtet ist, ein Funksignal, welches die Aktivierungsinformation enthält, zu erzeugen und auszusenden;
- das erste Akkupack (3a) eine erste Kommunikationseinheit (5a) der Kommunikationsvorrichtung (5a, 5b, 5c) aufweist, die dazu eingerichtet ist, das Funksignal zu erfassen.

12. System (1) nach Anspruch 10, wobei
- das zweite Akkupack (3b) eine zweite Kommunikationseinheit (5b) der Kommunikationsvorrichtung (5a, 5b, 5c) aufweist, die dazu eingerichtet ist, ein Funksignal, welches die Aktivierungsinformation enthält, zu erzeugen und auszusenden;
- das System (1) eine externe Kommunikationseinheit (5c) der Kommunikationsvorrichtung (5a, 5b, 5c) aufweist, die dazu eingerichtet ist, das Funksignal zu erfassen und abhängig von dem Funksignal ein weiteres Funksignal, welches die Aktivierungsinformation enthält, zu erzeugen und auszusenden;und
- das erste Akkupack (3a) eine erste Kommunikationseinheit (5a) der Kommunikationsvorrichtung (5a, 5b, 5c) aufweist, die dazu eingerichtet ist, das weitere Funksignal zu erfassen.

13. System (1) nach einem der Ansprüche 10 bis 12, wobei das System (1) das erste Gartengerät (2a) und das zweite Gartengerät (2b) beinhaltet.

14. System (1) nach Anspruch 13, wobei
- das erste Gartengerät (2a) als Gerät zur Rasenbearbeitung ausgestaltet ist; oder
- das erste Gartengerät (2a) als Gerät zur Gartenbewässerung ausgestaltet ist.

15. System (1) nach einem der Ansprüche 13 oder 14, wobei
- das zweite Gartengerät (2b) eine Bedieneinheit (7) zur manuellen Bedienung des zweiten Gartengeräts (2b) aufweist; und
- die Sensoreinheit (6) mit der Bedieneinheit gekoppelt ist, um die manuelle Bedienung als die Aktivierung des zweiten Gartengeräts (2b) zu detektieren

## Claims

1. Method for coupled operation of electrically operable gardening tools, wherein
- a first electrically operable gardening tool (2a), which comprises a first battery pack (3a), is operated in an active operating mode;
**characterized in that**
- an activation of a second electrically operable gardening tool (2b) is detected by means of a second battery pack (3b) of the second gardening tool (2b);
- activation information is transferred from the second battery pack (3b) to the first battery pack (3a) when the activation of the second gardening tool (2b) has been detected;
- the active operating mode of the first gardening tool (2a) is terminated by means of the first battery pack (3a) depending on the activation information.

2. The method according to claim 1, wherein the activation of the second gardening tool (2b) is detected as a manual activation by a user of the second gardening tool (2b).

3. The method according to any one of the preceding claims, wherein the first gardening tool (2a) is operated automatically during the operation in the active operating mode.

4. The method according to any one of the preceding claims, wherein
- the first gardening tool (2a) is operated in the active operating mode for lawn processing; or
- the first gardening tool (2a) is operated in the active operating mode for garden irrigation.

5. The method according to any one of the preceding claims, wherein the first gardening tool (2a) is transferred into a passive operating mode depending on the activation information.

6. The method according to any one of claims 1 to 4, wherein the first gardening tool (2a) is caused to automatically connect itself to a charging station for the first gardening tool (2a) depending on the activation information.

7. The method according to any one of the preceding claims, wherein
- a deactivation of the second gardening tool (2b) is detected by means of the second battery pack (3b);
- deactivation information is transferred from the second battery pack (3b) to the first battery pack (3a), when the deactivation of the second gardening tool (2b) has been detected;
- the active operating mode of the first gardening tool (2a) is started by means of the first battery pack (3a) depending on the deactivation information.

8. The method according to any one of the preceding claims, wherein by means of the second battery pack (3b)
- a radio signal is generated, which contains the activation information;
- the radio signal is transmitted to the first battery pack (3a), to transfer the activation information to the first battery pack (3a).

9. The method according to any one of claims 1 to 7, wherein by means of the second battery pack (3b)
- a radio signal is generated, which contains the activation information;
- the radio signal is transmitted to an external communication unit (5);
- depending on the transmitted radio signal, a further radio signal, which contains the activation information, is transmitted from the external communication unit (5) to the first battery pack (3a) to transfer the activation information to the first battery pack (3a).

10. A system (1) for coupled operation of electrically operable gardening tools, the system (1) comprising a first battery pack (3a) for a first electrically operable gardening tool (2a) and a second battery pack (3b) for a second electrically operable gardening tool (2b), **characterized in that**:
- the second battery pack (3b) comprises a sensor unit (6), which is configured to detect an activation of the second gardening tool (2b);
- the system (1) comprises a communication device (5a, 5b, 5c), which is configured to transfer activation information from the second battery pack (3b) to the first battery pack (3a) depending on the detected activation of the second gardening tool (2b); and
- the first battery pack (3a) comprises a control circuit (7), which is configured to terminate an active operating mode of the first gardening tool (2a) depending on the activation information.

11. The system (1) according to claim 10, wherein
- the second battery pack (3b) comprises a second communication unit (5b) of the communication device (5a, 5b, 5c), which is configured to generate and emit a radio signal, which contains the activation information;
- the first battery pack (3a) comprises a first communication unit (5a) of the communication device (5a, 5b, 5c), which is configured to detect the radio signal.

12. The system (1) according to claim 10, wherein
- the second battery pack (3b) comprises a second communication unit (5b) of the communication device (5a, 5b, 5c), which is configured to generate and emit a radio signal, which contains the activation information;
- the system (1) comprises an external communication unit (5c) of the communication device (5a, 5b, 5c), which is configured to detect the radio signal and to generate and emit a further radio signal, which contains the activation information, depending on the radio signal; and
- the first battery pack (3a) comprises a first communication unit (5a) of the communication device (5a, 5b, 5c), which is configured to detect the further radio signal.

13. The system (1) according to any one of claims 10 to 12, wherein the system (1) includes the first gardening tool (2a) and the second gardening tool (2b).

14. The system (1) according to claim 13, wherein
- the first gardening tool (2a) is configured as a tool for lawn processing; or
- the first gardening tool (2a) is configured as a tool for garden irrigation.

15. The system (1) according to any one of claims 13 or 14, wherein
- the second gardening tool (2b) comprises a control unit (7) for manually controlling the second gardening tool (2b); and
- the sensor unit (6) is coupled to the control unit to detect the manual control as the activation of the second gardening tool (2b)

## Revendications

1. Procédé de fonctionnement couplé d'outils de jardinage électriques,
- un premier outil de jardinage électrique (2a), qui comporte un premier bloc de batterie (3a), fonctionnant dans un mode de fonctionnement actif ;
**caractérisé en ce que**
- une activation d'un deuxième outil de jardinage électrique (2b) est détectée au moyen d'un deuxième bloc de batterie (3b) du deuxième outil de jardinage (2b) ;
- une information d'activation est transmise du deuxième bloc de batterie (3b) au premier bloc de batterie (3a) lorsque l'activation du deuxième outil de jardinage (2b) a été détectée ;
- le mode de fonctionnement actif du premier outil de jardinage (2a) est terminé au moyen du premier bloc de batterie (3a) en fonction de l'information d'activation.

2. Procédé selon la revendication 1, l'activation du deuxième outil de jardinage (2b) étant détectée comme une activation manuelle du deuxième outil de jardinage (2b) par un utilisateur.

3. Procédé selon l'une des revendications précédentes, le premier outil de jardinage (2a) fonctionnant automatiquement pendant le fonctionnement en mode de fonctionnement actif.

4. Procédé selon l'une des revendications précédentes,
- le premier outil de jardinage (2a) fonctionnant dans le mode de fonctionnement actif pour le traitement du gazon ; ou
- le premier outil de jardinage (2a) fonctionnant en mode de fonctionnement actif pour l'arrosage du jardin.

5. Procédé selon l'une des revendications précédentes, le premier outil de jardinage (2a) étant transféré vers un mode de fonctionnement passif en fonction de l'information d'activation.

6. Procédé selon l'une des revendications 1 à 4, le premier outil de jardinage (2a) étant amené, en fonction de l'information d'activation, à se connecter automatiquement à une station de charge pour le premier outil de jardinage (2a).

7. Procédé selon l'une des revendications précédentes,
- une désactivation du deuxième outil de jardinage (2b) étant détectée au moyen du deuxième bloc de batterie (3b) ;
- une information de désactivation étant transmise du deuxième bloc de batterie (3b) au premier bloc de batterie (3a) lorsque la désactivation du deuxième outil de jardinage (2b) a été détectée ;
- le mode de fonctionnement actif du premier outil de jardinage (2a) étant démarré au moyen du premier bloc de batterie (3a) en fonction de l'information de désactivation.

8. Procédé selon l'une des revendications précédentes, le deuxième bloc de batterie (3b) permettant
- de générer un signal radio qui contient l'information d'activation ;
- de transmettre le signal radio au premier bloc de batterie (3a) afin de transmettre l'information d'activation au premier bloc de batterie (3a).

9. Procédé selon l'une des revendications 1 à 7, le deuxième bloc de batterie (3b) permettant
- de générer un signal radio qui contient l'information d'activation ;
- de transmettre le signal radio à une unité de communication extérieure (5) ;
- de transmettre, en fonction du signal radio transmis, un autre signal radio, qui contient l'information d'activation, de l'unité de communication extérieure (5) au premier bloc de batterie (3a) afin de transmettre l'information d'activation au premier bloc de batterie (3a).

10. Système (1) de fonctionnement couplé d'outils de jardinage électriques, le système (1) comportant un premier bloc de batterie (3a) destiné à un premier outil de jardinage électrique (2a) et un deuxième bloc de batterie (3b) destiné à un deuxième outil de jardinage électrique (2b), **caractérisé en ce que** :
- le deuxième bloc de batterie (3b) comporte une unité de détection (6) qui est conçue pour détecter l'activation du deuxième outil de jardinage (2b) ;
- le système (1) comporte un dispositif de communication (5a, 5b, 5c) qui est conçu pour transmettre une information d'activation du deuxième bloc de batterie (3b) au premier bloc de batterie (3a) en fonction de l'activation détectée du deuxième outil de jardinage (2b) ; et
- le premier bloc de batterie (3a) comporte un circuit de commande (7) qui est conçu pour mettre fin à un mode de fonctionnement actif du premier outil de jardinage (2a) en fonction de l'information d'activation.

11. Système (1) selon la revendication 10,
- le deuxième bloc de batterie (3b) comportant une deuxième unité de communication (5b) du dispositif de communication (5a, 5b, 5c) qui est conçue pour générer et émettre un signal radio qui contient l'information d'activation ;
- le premier bloc de batterie (3a) comportant une première unité de communication (5a) du dispositif de communication (5a, 5b, 5c), qui est conçue pour détecter le signal radio.

12. Système (1) selon la revendication 10,
- le deuxième bloc de batterie (3b) comportant une deuxième unité de communication (5b) du dispositif de communication (5a, 5b, 5c) qui est conçue pour générer et émettre un signal radio qui contient l'information d'activation ;
- le système (1) comportant une unité de communication extérieure (5c) du dispositif de communication (5a, 5b, 5c) qui est conçue pour détecter le signal radio et, en fonction du signal radio, pour générer et émettre un autre signal radio qui contient l'information d'activation ; et
- le premier bloc de batterie (3a) comportant une première unité de communication (5a) du dispositif de communication (5a, 5b, 5c), qui est conçue pour détecter l'autre signal radio.

13. Système (1) selon l'une des revendications 10 à 12, le système (1) comprenant le premier outil de jardinage (2a) et le deuxième outil de jardinage (2b).

14. Système (1) selon la revendication 13,
- le premier outil de jardinage (2a) étant conçu comme un dispositif de traitement de gazon ; ou
- le premier outil de jardinage (2a) étant conçu comme un dispositif d'arrosage du jardin.

15. Système (1) selon l'une des revendications 13 ou 14,
- le deuxième outil de jardinage (2b) comportant une unité de commande (7) destinée au fonctionnement manuel du deuxième outil de jardinage (2b) ; et
- l'unité de détection (6) étant couplée à l'unité de commande pour détecter le fonctionnement manuel comme l'activation du deuxième outil de jardinage (2b).
